# EUROPÄISCHE PATENTSCHRIFT

(11) **EP 2 913 224 B1**
(45) Veröffentlichungstag und Bekanntmachung des Hinweises auf die Patenterteilung: **13.04.2016**
(21) Anmeldenummer: 14157232.1
(22) Anmeldetag: 28.02.2014
(51) Int. Cl.: B60N 2/60, B60N 2/58

(54) **Fahrzeugsitz-Schutzbezug**
Vehicle seat protective cover
Revêtement de protection de siège de véhicule

(43) Veröffentlichungstag der Anmeldung: 02.09.2015
(73) Patentinhaber: Horn & Bauer GmbH & Co. KG, 34613 Schwalmstadt (DE)
(72) Erfinder:
(74) Vertreter: REHBERG HÜPPE + PARTNER

(56) Entgegenhaltungen:
- EP-A2- 1 055 554
- WO-A2-2008/002684
- DE-A1- 19 923 889
- US-A- 5 806 925
- US-A1- 2005 130 537
- US-B1- 7 537 284

## Beschreibung

### TECHNISCHES GEBIET DER ERFINDUNG

Die Erfindung betrifft einen Fahrzeugsitz-Schutzbezug sowie ein Verfahren zur Herstellung eines Fahrzeugsitz-Schutzbezugs. Fahrzeugsitz-Schutzbezüge werden über Fahrzeugsitze gestülpt oder gezogen, um eine Verschmutzung des Fahrzeugsitzes, insbesondere durch Monteure, andere Personen oder Verschmutzungen der Umgebung, zu vermeiden. Fahrzeugsitz-Schutzbezüge werden bspw. verwendet in Automobilwerkstätten, wenn an Fahrzeugen eine Inspektion oder Reparatur durchgeführt wird. Darüber hinaus finden Fahrzeugsitz-Schutzbezüge Einsatz zur Vermeidung einer Verschmutzung des Fahrzeugsitzes beim Hersteller des Fahrzeugsitzes sowie bei der Zulieferung des Fahrzeugsitzes zum Automobilwerk. Auch während der Montage des Fahrzeugs kommt eine Vielzahl von Monteuren nacheinander mit den Fahrzeugsitzen in Berührung. Schließlich muss das fertig montierte Fahrzeug vom Band gefahren, auf Lastkraftwagen oder Eisenbahnwaggons aufgefahren und letztendlich beim Fahrzeughändler noch mehrmals gehandhabt werden, bis das Fahrzeug in möglichst sauberem Zustand in die Hand des Erwerbers ausgeliefert werden kann. Von der Herstellung des Fahrzeugsitzes beim Zulieferer bis zur Auslieferung des Fahrzeugs an den Erwerber kommt der Fahrzeugsitz unter Umständen 30 bis 35 Mal in Kontakt mit Monteuren oder anderen Personen, so dass eine erhebliche Verschmutzungsgefahr besteht, welche mittels eines Fahrzeugsitz-Schutzbezugs vermieden werden soll.

### STAND DER TECHNIK

DE 199 23 889 C2 (Familienmitglied von EP1055554) der Anmelderin beschreibt als Stand der Technik einen Fahrzeugsitz-Schutzbezug aus doppellagiger Kunststofffolie, nämlich einer Vorderlage und einer Rücklage, gemäß DE 41 32 714 A1. Bei diesem Fahrzeugsitz-Schutzbezug sind die zwei Taschen bildenden Bereiche der Rücklage durch Verbindungsstreifen verbunden, die sich über die freien Ränder der die Taschen bildenden Bereiche entlang von Querschweißungen erstrecken. Die Verbindungsstreifen sind auch mit der Vorderlage verbunden, so dass die somit im Wesentlichen durchgehende Rücklage eine randgeschlossene Ausnehmung aufweist. Die Vorderlage und die Rücklage weisen damit gleich große Umrisse auf und sind miteinander an allen vier Kanten durchgehend verbunden, also sowohl im Bereich der Querschweißungen als auch im Bereich der Längsränder. Während die Vorderlage durchgehend geschlossen ausgebildet ist, ist in der Rücklage die randgeschlossene Ausnehmung vorgesehen, die allseits mit Abstand zum Umriss des flachliegenden Fahrzeugsitz-Schutzbezugs angeordnet ist und die einzige Öffnung darstellt, mit deren Hilfe der Fahrzeugsitz-Schutzbezug über die Rückenlehne und das Sitzpolster gestülpt werden kann. Durch die Verbindungsstreifen werden neben den beiden bisher bekannten Taschen zusätzliche, die Taschen verbindende Quertaschen geschaffen, die das Sitzpolster und die Rückenlehne in Übergangsbereichen hintergreifen und damit einen wirksamen Schutz dieser gefährdeten Stellen des Fahrzeugsitzes gegen Verschmutzung darstellen. Die Verrutschungsgefahr bei Benutzung des Fahrzeugsitzes, der mit einem Fahrzeugsitz-Schutzbezug geschützt ist, ist praktisch beseitigt. Trotzdem wird bei der Herstellung dieses Fahrzeugsitz-Schutzbezugs jegliche Handarbeit vermieden. Auch entfällt die zusätzliche Verwendung von Gummibändern, Folienstreifen u. dgl. und es erübrigt sich ein zusätzlicher Montageaufwand. Beim Überstülpen des Fahrzeugsitz-Schutzbezugs gelangt dieser vielmehr automatisch in seine das Sitzpolster sowie die Rückenlehne umhüllende Schutzstellung. Durch die Querschweißung wird die Vorderlage mit der Rücklage an jedem Sitz durchgehend verbunden. Andererseits kann die Querschweißung jedoch so erfolgen, dass die einzelnen Fahrzeugsitz-Schutzbezüge dabei zugleich voneinander abgetrennt werden, so dass sie in einem Stapel übereinander geschichtet abgelegt werden und auch in dieser Weise in einen Versand zu einem Hersteller des Fahrzeugsitzes, zu einem Fahrzeughersteller oder zu einer Werkstatt gelangen können. Daneben ist es aber auch möglich, die einzelnen Fahrzeugsitz-Schutzbezüge über Perforationen aneinander hängend zu lassen und eine solche Endlosbahn auf einer Vorratsrolle aufzuwickeln.

Die zur Herstellung der Fahrzeugsitz-Schutzbezüge eingesetzte Kunststofffolie weist aus Materialersparnisgründen u. U. nur eine geringe Dicke auf, so dass bei Überstülpen die Gefahr des Einreißens bestehen kann. In einem solchen Fall ist der ordnungsgemäße Sitz des Fahrzeugsitz-Schutzbezugs auf dem Fahrzeugsitz nicht mehr gewährleistet. Wenn Fahrzeugsitze, mit der Rückenlehne nach unten an einem Förderband hängend, dem Montageband des Fahrzeugs zugeführt werden, besteht weiterhin die Gefahr, dass sich die Fahrzeugsitz-Schutzbezüge ungewollt von dem Fahrzeugsitz lösen und herabfallen. Damit erfüllen die Fahrzeugsitz-Schutzbezüge ihre Schutzfunktion nicht mehr. In DE 199 23 889 C2 wird es als bekannt beschrieben, dieser Gefahr entgegenzuwirken, indem als gesondertes Teil zu dem Fahrzeugsitz-Schutzbezug ein Gummiband verwendet wird, welches nach dem Überstülpen des Fahrzeugsitz-Schutzbezugs als geschlossene Schleife so über die Rückenlehne geführt wird, dass das Gummiband im Übergangsbereich zwischen Sitzpolster und Rückenlehne anliegt. Durch diese Maßnahme wird das unbeabsichtigte Herabfallen eines Fahrzeugsitz-Schutzbezugs von einem hängend geförderten Fahrzeugsitz vermieden. Gleichzeitig wird die Vorderlage des Sitzbezugs im Übergangsbereich zwischen Sitzpolster und Rückenlehne durch das Gummiband fixiert, so dass einer Verrutschungsgefahr entgegengewirkt wird. Die Verwendung solcher Gummibänder zusätzlich zu Fahrzeugsitz-Schutzbezügen ist jedoch aufwändig und erbringt nur bedingt Abhilfe gegen die Verschmutzungsgefahr.

Ebenfalls als bekannt beschrieben wird in DE 199 23 889 C2, anstelle einer zusätzlichen Verwendung eines Gummibands etwa im Mittelbereich des freien Rands der Tasche, die die Rückenlehne umschließt, zwei Folienstreifen anzuschweißen. Diese beiden Folienstreifen werden nach Art von Bändern an einer Kittelschürze nach dem Überstülpen des Fahrzeugsitz-Schutzbezugs über den Sitz nach vorne geschlungen und dort miteinander verknotet, so dass auch hier ein engeres Anliegen der Vorderlage des Sitzbezugs im Übergangsbereich zwischen Sitzpolster und Rückenlehne erreicht wird. Die Herstellung dieser zusätzlichen Folienstreifen und insbesondere das Anschweißen ist aufwendig, erfordert nach dem Überstülpen des Fahrzeugsitz-Schutzbezugs einen zusätzlichen Verknotungsvorgang und bringt darüber hinaus auch nur bedingt Abhilfe gegen die Verschmutzungsgefahr. Im Vergleich zu einem Gummiband sitzen die Folienstreifen vergleichsweise zu hoch an der Rückenlehne.

Gemäß DE 199 23 889 C2 wird ein weiterer bekannter Fahrzeugsitz-Schutzbezug zunächst so hergestellt, wie es in DE-AS 16 30 878 beschrieben ist. Nach dem Zerteilen einer Kunststoffbahn in die einzelnen Fahrzeugsitz-Schutzbezüge erfolgt ein Anschweißen eines Halbschlauchs entlang der freien Ränder der von der Rücklage gebildeten Taschen sowie entlang der freien Ränder der Vorderlage in dem von den Taschen nicht abgedeckten Bereich. Beim Anschweißen des Halbschlauchs wird ein Gummiband in Form einer Schleife eingelegt. Mit diesem Gummiband wird an dem Fahrzeugsitz-Schutzbezug dann eine Öffnung geschaffen, die zum Überstülpen auf den Fahrzeugsitz genutzt wird. Das Gummiband übt dann eine gewisse Straffungswirkung aus, so dass insbesondere die Vorderlage des Fahrzeugsitz-Schutzbezugs näher an dem Sitzpolster und an der Rückenlehne gehalten ist. Ein solcher Fahrzeugsitz-Schutzbezug ist durch das Anschweißen des Halbschlauchs mit dem Gummiband, welches in Handarbeit durchgeführt wird, besonders aufwändig und teuer, erbringt aber andererseits eine gute Schutzwirkung. Das Überstülpen eines solchen Fahrzeugsitz-Schutzbezugs über einen Fahrzeugsitz ist jedoch vergleichsweise schwieriger durchzuführen als bei dem zuvor beschriebenen Fahrzeugsitz-Schutzbezug.

DE 199 23 889 C2 beschreibt es auch als bekannt, ein Gummiband auf den Rand einer randgeschlossenen Ausnehmung eines Sitzbezugs aus Kunststofffolie aufzunähen. Das Aufnähen geschieht in Handarbeit und unter Fixierung des Gummibands unter Vorspannung. Dies hat zur Folge, dass das Gummiband als elastischer Fremdkörper die unelastische Folie unter Faltenbildung zusammenzieht. Dies stört nicht nur optisch, sondern verhindert auch bereits das Aufwickeln auf eine Rolle. Selbst als Einzelstücke im Stapel lassen sich solche Fahrzeugsitz-Schutzbezüge nur schwer handhaben. Weitere Nachteile dieser Ausführungsform sind ein faltiger Sitz auf dem Fahrzeugsitz, eine Störanfälligkeit für elektronische Schranken und eine Ein- und Weiterreißgefahr der Folie.

Schließlich beschreibt DE 199 23 889 C2 auch als bekannt einen Fahrzeugsitz-Schutzbezug für Fahrzeugsitze gemäß DE-OS 19 20 529, der aus einem allseitig elastisch dehnbaren Untergarngewebe mit hoher Rückdehnung und mit in gedehntem Zustand des elastischen Garngewebes eingestrickter hochfloriger Wolle oder einem ähnlichen Material besteht. Infolge der großen Dehnbarkeit ist ein derartiger Fahrzeugsitz-Schutzbezug einfach in der Handhabung und kann leicht auf den Fahrzeugsitz aufgebracht werden. Der Fahrzeugsitz-Schutzbezug kann als Universal-Fahrzeugsitz-Schutzbezug ausgebildet sein, der sich auch Fahrzeugsitzen unterschiedlicher Geometrie anpassen kann. Der Fahrzeugsitz-Schutzbezug kann in diesem Fall aus mehreren Teilen oder Lagen bestehen, wobei in einer der Lagen eine Öffnung vorgesehen ist, um den Fahrzeugsitz-Schutzbezug sowohl über die Rückenlehne als auch über das Sitzpolster ziehen zu können.

Vor diesem Hintergrund schlägt DE 199 23 889 C2 vor, zumindest die Rücklage des Fahrzeugsitz-Schutzbezugs ganz oder teilweise aus einer elastischen, rückstellfähigen Kunststofffolie herzustellen. Die Elastizität der Rücklage soll genutzt werden, um das Abnehmen und Wiederanlegen des Fahrzeugsitz-Schutzbezugs zu ermöglichen, insbesondere im Zusammenhang mit der Montage des Kraftfahrzeugsitzes, zur Gewährleistung der Erreichbarkeit von Befestigungsschrauben des Fahrzeugsitzes, für den Einbau einer Schublade, eines Feuerlöschers u. ä. Infolge der Elastizität kann der Fahrzeugsitz-Schutzbezug auch in seinen Dimensionen etwas kleiner hergestellt werden als bisher. Die Elastizität erbringt dennoch eine leichte Handhabung beim Überstülpen und einen verbesserten Sitz des Fahrzeugsitz-Schutzbezugs. Darüber hinaus legt sich der Fahrzeugsitz-Schutzbezug in übergestülptem Zustand exakt an die Kontur des Kraftfahrzeug-Sitzes an. Damit entfällt eine Störmöglichkeit, wenn z. B. die richtige Position des Fahrzeugsitzes im Fahrzeug mit elektronischen Schranken vermessen und geprüft wird. Überhängende Folienbereiche oder Falten des Fahrzeugsitz-Schutzbezugs können nicht mehr zu einer Störung führen. Der Fahrzeugsitz-Schutzbezug kann schnell und sicher sowie faltenfrei mit die Konturen des Fahrzeugsitzes eng umschließendem Sitz aufgezogen werden. Vorgeschlagen wird vorzugsweise die Ausstattung der die Rücklage bildenden Kunststofffolie mit einer elastischen Dehnung von mindestens 50 %, vorzugsweise mindestens 60 %. Einsatz findet als Material für das Folienmaterial der Rücklage ein Copolymer, insbesondere aus Ethylen-Vinylacetat oder Butylen-Vinylacetat, wobei auch andere Materialien den Anforderungen genügen können, beispielsweise auch ein thermoplastisches Elastomer oder ein besonders elastisches low-density Material, welches zumindest schichtweise oder in Abmischungen oder zu 100 % eingesetzt sein kann. Vorgeschlagen wird darüber hinaus, dass die elastische Rücklage mit einer Mehrschichtfolie ausgebildet ist, wobei eine Schicht der Mehrschichtfolie gezielt mit guten Verschweißeigenschaften ausgestattet wird. Darüber hinaus wird vorgeschlagen, dass die die Vorderlage bildende Kunststofffolie auf der dem Fahrzeugsitz zugekehrten Innenseite rutschsichernd und auf der Außenseite glatt ausgebildet sein kann.

DE 297 05 666 U1 schlägt einen Fahrzeugsitz-Schutzbezug aus einem Faservliesstoff vor, welcher einen angenehmen textilen Oberflächencharakter besitzen soll, keine "Abfaserungen" ausbilden soll, eine gute Passform an die jeweilige Gestaltung des Fahrzeugsitzes aufweisen soll und nach Gebrauch möglichst für den gleichen Verwendungszweck recycelt werden kann. Hierzu ist der Fahrzeugsitz-Schutzbezug gemäß DE 297 05 666 U1 aus einem Faservliesstoff hergestellt, dessen Flächengewicht kleiner ist als 100 g/m². Der Faservliesstoff wird hierzu in der Form des Fahrzeugsitz-Schutzbezugs zugeschnitten. Der derart gebildete, grundsätzlich einteilige Fahrzeugsitz-Schutzbezug bedeckt dann ganzflächig die Sitzfläche, die Sitzkanten und die Rückenlehne. Zur Gewährleistung der Passbeständigkeit und allseitigen Haftung des Fahrzeugsitz-Schutzbezugs wirken neben der zugeschnittenen Form des Fahrzeugsitz-Schutzbezugs zwei Halteelemente. Hierbei handelt es sich einerseits um ein am Sitzumschlag angenähtes Gummiband oder auf den gerafften Faservliesstoff aufgenähtes Textilband oder ein angenähtes Bindeband mit einseitiger Schlaufe sowie andererseits um eine weitere mechanische Verbindung zwischen einer am Sitzhinterteil des Fahrzeugsitz-Schutzbezugs angenähten Haltelasche und dem Lehnenhinterteil des Fahrzeugsitz-Schutzbezugs. Nach Gebrauch des Fahrzeugsitz-Schutzbezugs soll dieser grob zerkleinert werden. In einer Reißmaschine werden dann Reißfasern hergestellt, die wieder in ein Faservlies eingemischt werden können.

Weiterer Stand der Technik, welcher dauerhaft einsetzbare, verhältnismäßig massive und individuell vorgeformte sowie waschbare Schutzbezüge für Fahrzeugsitze oder Kindersitze betrifft, ist aus den Druckschriften WO 2008/002684 A2, US7 537 284 B1, US 2005/130537 A1 und US 5 806 925 A bekannt.

### AUFGABE DER ERFINDUNG

Der Erfindung liegt die Aufgabe zugrunde, einen Fahrzeugsitz-Schutzbezug vorzuschlagen, welcher insbesondere hinsichtlich
- der eingesetzten Materialien,
- der Anpassbarkeit an einen Fahrzeugsitz,
- der Wechselwirkung mit einer Person, welche auf dem mit dem Fahrzeugsitz-Schutzbezug geschützten Fahrzeugsitz sitzt oder diesen handhabt,
- der insbesondere stofflichen Wiederverwertbarkeit,
- einer optischen Prüfung des Fahrzeugsitzes auch bei darauf angeordnetem Fahrzeugsitz-Schutzbezug,
- der Montage und Demontage mit dem Fahrzeugsitz und/oder
- der Stapelbarkeit oder Aufrollbarkeit
verbessert ist. Des Weiteren liegt der Erfindung die Aufgabe zugrunde, ein Verfahren zur Herstellung eines entsprechend verbesserten Fahrzeugsitz-Schutzbezugs vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft einen Fahrzeugsitz-Schutzbezug, welcher grundsätzlich, insbesondere hinsichtlich der Geometrie, den aus dem Stand der Technik bekannten Fahrzeugsitz-Schutzbezügen entsprechen kann. Hierbei ist der Fahrzeugsitz-Schutzbezug mit einer Vorderlage und einer Rücklage gebildet. Der Fahrzeugsitz-Schutzbezug dient zur zumindest teilweisen Abdeckung eines Fahrzeugsitzes, beispielsweise im Bereich des Sitzpolsters und/oder der Rückenlehne. Erfindungsgemäß ist die Rücklage des Fahrzeugsitz-Schutzbezugs mit einer Kunststofffolie gebildet.

Die Erfindung basiert auf der Erkenntnis, dass die Ausbildung der Vorderlage des Fahrzeugsitz-Schutzbezugs aus einer Kunststofffolie, wie dies beispielsweise gemäß DE 199 23 889 C2 der Fall ist, nachteilig sein kann:
- Unter Umständen wird die Vorderlage aus einer Kunststofffolie von einem Benutzer als "unangenehm" empfunden. Beispielsweise ist eine derartige Kunststofffolie nicht sehr atmungsaktiv. Schwitzt der Benutzer auf dem mit der Vorderlage abgedeckten Fahrzeugsitz (insbesondere im Sommer und mit einer kurzen Hose), so bildet sich zwischen der Person und der Kunststofffolie ein Schweißfilm aus, welcher als unangenehm empfunden wird und auch die Anhaftung der Kunststofffolie an der Person verstärken kann.
- Problematisch ist die mangelnde Atmungsaktivität der aus einer Kunststofffolie gebildeten Vorderlage auch, wenn der Fahrzeugsitz eine gewisse Restfeuchtigkeit besitzt, welche beispielsweise aus dem Herstellungs- oder Bereitstellungsprozess des Fahrzeugsitzes entstammt oder nach einer gezielten Bedampfung des Fahrzeugsitzes verbleibt, die dazu dient, Falten aus dem Fahrzeugsitz herauszuziehen. In diesem Fall führt die Abdeckung des Fahrzeugsitzes mit der Vorderlage aus der nicht permeablen Kunststofffolie unter Umständen zu einer Behinderung der Trocknung des Fahrzeugsitzes bis hin zu der Gefahr eines "Stockens" des Fahrzeugsitzes und der Ausbildung von Schimmel.
- Unter Umständen führt die Ausbildung der Vorderlage aus einer Kunststofffolie zu einer Geräuschbildung, wenn sich die Person auf dem Fahrzeugsitz bewegt oder der Fahrzeugsitz einfedert, womit es zu Verformungen der Kunststofffolie kommt. Dies kann bereits von der Person als störend empfunden werden. Besonders unerwünscht ist eine derartige Geräuschentwicklung, wenn der Fahrzeugsitz-Schutzbezug verwendet wird in Verbindung mit akustischen Messungen, insbesondere mit einer Untersuchung von Innenraumgeräuschen, Windgeräuschen u. ä. Hier führt die Geräuschentwicklung der Vorderlage aus der Kunststofffolie zu einer unerwünschten Beeinträchtigung der Untersuchungsergebnisse.

Vor diesem Hintergrund wird erfindungsgemäß vorgeschlagen, dass die Vorderlage, zumindest in signifikanten Teilbereichen, mit einem Vlies gebildet ist. Diese Ausgestaltung beruht auf der Erkenntnis, dass bei Verwendung des Vlieses die zuvor genannten Nachteile des Einsatzes einer Kunststofffolie vermieden sind, nämlich eine gute Atmungsaktivität des Vlieses gegeben ist, das Vlies permeabel ist und das Vlies ein deutlich verbessertes Schallemissionsverhalten bei Bewegungen besitzt.

Grundsätzlich ist der Einsatz eines Vlieses für einen Fahrzeugsitz-Schutzbezug bereits aus DE 297 05 666 U1 bekannt. Erstmalig schlägt die Erfindung allerdings vor, den Fahrzeugsitz-Schutzbezug teilweise mit dem Vlies zu bilden sowie teilweise mit einer Kunststofffolie, welche bevorzugt im Bereich der Rücklage angeordnet ist. Erfindungsgemäß können somit erstmals gewünschte Eigenschaften der Kunststofffolie in einem Teilbereich des Fahrzeugsitz-Schutzbezugs mit gewünschten Eigenschaften des Vlieses in einem anderen Teilbereich des Fahrzeugsitz-Schutzbezugs kombiniert werden, womit sich die Gestaltungsmöglichkeiten erweitern und eine Optimierung des Fahrzeugsitz-Schutzbezugs ermöglich ist. Anders gesagt können gezielt für unterschiedliche Teilbereiche des Fahrzeugsitz-Schutzbezugs unterschiedliche Materialien und Materialeigenschaften genutzt werden.

Um lediglich ein nicht beschränkendes Beispiel zu nennen, ist möglicherweise bei Ausbildung der Vorderlage mit einem Vlies der Fahrzeugsitz durch die Vorderlage nicht mehr sichtbar. Indem die Rücklage zumindest teilweise aus der Kunststofffolie hergestellt ist, ist es ermöglicht, dass der Fahrzeugsitz im Bereich der Kunststofffolie sichtbar bleibt. Auf diese Weise kann insbesondere vermieden werden, dass bei Anlieferung mehrerer Fahrzeugsitze zu einer Montagestraße in mit dem Fahrzeugsitz-Schutzbezug geschütztem Zustand fälschlicherweise zwei Fahrzeugsitze mit unterschiedlicher Farbgestaltung in dasselbe Fahrzeug montiert werden.

Die erfindungsgemäße Ausgestaltung des Fahrzeugsitz-Schutzbezugs basiert darüber hinaus auf der Erkenntnis, dass eine Verbindung eines Vliesstoffes mit weiteren Bestandteilen des Fahrzeugsitzes, insbesondere eine Verbindung mit einem Halteelement, einem Gummiband, einem Textilband oder einem Bindeband, durch Annähen, wie dies gemäß DE 297 05 666 U1 erforderlich ist, nachteilig ist. Zunächst führt der Vorgang des Annähens zum Einsatz eines zusätzlichen Bestandteils in Form des Nähfadens. Dieser zusätzlich Bestandteil muss während des Herstellungsprozesses zusätzlich bereitgestellt werden. Der Vorgang des Nähens ist darüber hinaus aufwendig, verlangsamt den Herstellungsprozess und erhöht die Kosten. Schließlich erschwert unter Umständen die Einbringung eines Nahtmaterials das Entsorgen und/oder Recyceln des Fahrzeugsitz-Schutzbezugs. Ein zusätzliches Gummi- oder Textilband muss dabei abgetrennt und getrennt behandelt werden, da es aus einem nicht gemeinsam mit dem Vlies verwertbaren Material besteht.

Gemäß der Richtlinie 2000/53/EG des Europäischen Parlamentes und des Rates, die die Rücknahme und Verwertung von gebrauchten Kraftfahrzeugen und deren Teilen beschreibt, müssen ab dem 1. Januar 2015 Materialien und Teile von Kraftfahrzeugen zu 95 % des durchschnittlichen Fahrzeuggewichtes pro Jahr wiederverwendet oder verwertet werden. Ein Fahrzeugsitz-Schutzbezug bildet ein solches Teil eines Kraftfahrzeugs. Wurde eine Naht mit einem Nahtmaterial in den Fahrzeugsitz-Schutzbezug eingebracht, so muss das Nahtmaterial vor einer stofflichen Verwertung entfernt werden, so dass ein zusätzlicher, aufwändiger Arbeitsschritt erforderlich ist. Ein erfindungsgemäßer Fahrzeugsitz-Schutzbezug kann dagegen im Ganzen einem Recycling zugeführt werden. Beispielsweise wird er geschreddert oder in einer Mühle zerkleinert und das entstehende Granulat zur Wiederverwendung eingeschmolzen. Da der Fahrzeugsitz-Schutzbezug einheitlich aus dem gleichen oder eng verwandten Materialien (wie beispielsweise Polypropylen) besteht, ist keine stoffliche Trennung vor dem Recycling erforderlich.

Erfindungsgemäß wird vorgeschlagen, dass die Verbindung des Vlieses mit der (oder einer) Kunststofffolie, insbesondere der aus der Kunststofffolie gebildeten Rücklage mit der aus dem Vlies gebildeten Vorderlage, durch Verschweißen erfolgt. Dies führt bei einem einfachen, kostengünstigen und unter Umständen schnellen Herstellungsverfahren zu einer zuverlässigen Verbindung, ohne dass zwingend ein zusätzliches Material für die Verbindung benötigt wird. Hierbei macht sich die Erfindung auch die überraschende Erkenntnis zu Nutze, dass ein Verschweißen des Vlieses mit der Rücklage im Bereich der Kunststofffolie durchaus möglich ist, ohne dass eine unter Umständen zu erwartende Schädigung der Verbundmaterialien mit einer bruchempfindlichen, nicht belastbaren Schweißnaht erzeugt wird.

Wie zuvor erläutert, kann durch unterschiedliche Gestaltung von Teilbereichen des Fahrzeugsitz-Schutzbezugs mit einerseits der Kunststofffolie und andererseits dem Vlies (und ggf. weiteren Teilbereichen aus anderen Materialien und Bahnen) eine gezielte Anpassung an unterschiedliche gewünschte Eigenschaften erfolgen. Um lediglich einige nicht beschränkende Beispiele zu nennen, können die unterschiedlichen Teilbereiche und Materialien zwecks Minimierung der Kosten gewählt werden. Wie bereits erwähnt, kann auch gezielt die Rücklage mit der Kunststofffolie durchsichtig gestaltet werden.

Im Rahmen der Erfindung erfolgt u. U. auch erstmals eine Übertragung
- einer Technologie, wie diese gemäß den Druckschriften DE 29 52 751 A1 und DE 36 23 568 A1 für Verpackungen von medizinischen Instrumenten, welche für das Sterilisieren dieser Instrumente durch Gas- oder Heizdampf genutzt werden, bekannt ist,
- auf das Gebiet der Fahrzeugsitz-Schutzbezüge.

Derartige Verpackungen von medizinischen Instrumenten besitzen vergleichsweise kleine Abmessungen und werden gebildet mit einer Lage aus Naturfasern oder Kunststofffasern, welche thermoplastisch verfilzt sind, oder mit einer Lage aus einem dünnen Vlies sowie einer weiteren Lage aus Kunststofffolie, welche randseitig miteinander verklebt, heiß versiegelt oder verschweißt werden. Hierbei findet die Lage aus Naturfasern oder Kunststofffasern bzw. das Vlies Einsatz, um trotz Anordnung des Instruments in der Verpackung oder dem Beutel die Beaufschlagung desselben mit dem Gas oder dem Heißdampf zwecks Sterilisation zu ermöglichen.

Erfindungsgemäß ist die mit der Kunststofffolie gebildete Rücklage elastisch ausgebildet. Für das Ausmaß dieser Elastizität der Rücklage gibt es vielfältige Möglichkeiten. Vorzugsweise ist die Elastizität der Rücklage zumindest größer als die Elastizität des Vlieses. Um lediglich ein weiteres mögliches Beispiel für die Gestaltung der Elastizität der Kunststofffolie zu nennen, kann diese eine elastische Dehnung von mindestens 50 %, insbesondere zumindest 60 % oder 80 % oder 100 % oder sogar 150 %, besitzen. Hierbei erfolgt einer Ermittlung der elastischen Dehnung mit einem Prüfverfahren, wie dieses im Detail in DE 199 23 889 C2 beschrieben ist. Durch die elastische Ausgestaltung der Rücklage ist der Einsatz zusätzlicher elastischer Mittel wie insbesondere eines Gummibands entbehrlich. Des Weiteren gewährleistet die elastische Ausbildung der Rücklage einen strammen Sitz des Fahrzeugsitz-Schutzbezugs und die gute Montierbarkeit und Demontierbarkeit des Fahrzeugsitz-Schutzbezugs. Durch die elastische Rückstellfähigkeit ist auch gewährleistet, dass der Fahrzeugsitz-Schutzbezug mehrfach verwendbar ist mit Montage und Demontage desselben. Andererseits kann eine elastische Ausgestaltung der Kunststofffolie der Rücklage erfolgen, ohne dass sich der Fahrzeugsitz-Schutzbezug "einrollt". Vielmehr kann eine gute Stapelbarkeit des Fahrzeugsitz-Schutzbezugs oder die Möglichkeit eines Aufrollens einer Bahn mit mehreren über Perforationen aneinanderhängenden Fahrzeugsitz-Schutzbezügen gewährleistet werden.

Erfindungsgemäß besitzt die Rücklage eine Ausnehmung. Über diese Ausnehmung sind/ist eine zwischen Vorderlage und Rücklage gebildete (obere) Tasche und/oder eine zwischen Vorderlage und Rücklage gebildete (untere) Tasche zugänglich. Hierbei dient die obere Tasche dazu, über eine Rückenlehne des Fahrzeugsitzes gezogen zu werden. Entsprechend dient eine etwaige untere Tasche dem Überziehen über ein Sitzpolster des Fahrzeugsitzes. Sind sowohl eine obere Tasche als auch eine untere Tasche vorhanden, kann mit einem kompakten Fahrzeugsitz-Schutzbezug das Abdecken sowohl der Rückenlehne des Fahrzeugsitzes als auch des Sitzpolsters des Fahrzeugsitzes erfolgen, wobei vorzugsweise die Vorderlage auf der dem Benutzer zugewandten Seite einen durchgehenden Schutz des Fahrzeugsitzes bildet.

Erfindungsgemäß besitzen durch die Ausnehmung die obere und die untere Tasche jeweils einen freien Rand. Diese beiden Ränder der Rücklage sind über Verbindungsstreifen, die Bestandteil der Rücklage sind, miteinander verbunden sind. Die Verbindungstreifen umgreifen oder hintergeifen den Fahrzeugsitz im Übergangsbereich zwischen Sitzpolster und Rückenlehne.

Für das Vlies, mit welchem die Vorderlage gebildet ist, kann an sich ein beliebiges bekanntes Vlies eingesetzt werden. Vorzugsweise ist das Vlies aus Fasern gebildet. Beispielsweise Einsatz finden können hierbei Fasern aus Polyethylen, PET und/oder Polyamid. In bevorzugter Ausgestaltung der Erfindung besitzt das Vlies Fasern aus Polypropylen. Polypropylen bildet ein verhältnismäßig kostengünstiges Material. Darüber hinaus stellt Polypropylen ein verhältnismäßig steifes Material dar, was für die Ausbildung der Vorderlage unter Umständen von Vorteil ist. Des Weiteren besitzt Polypropylen, beispielsweise im Gegensatz zu Fasern aus Polyethylen, eine geringe Neigung zu einem "Ausflocken" oder "Ausfasern" (auch als "Linting" bezeichnet), was insbesondere bei der Ausrüstung von Neufahrzeugen unerwünscht ist. Andererseits überkommt die Erfindung ein Vorurteil des Fachmanns, dass der Einsatz eines Vlieses mit Fasern aus Polypropylen im Zusammenhang mit einer Verschweißung des Vlieses mit einer aus Kunststofffolie gebildeten Rücklage nicht möglich sein soll.

Durchaus möglich ist, dass die Kunststofffolie, mit welcher die Rücklage gebildet ist, einschichtig ausgebildet ist. In bevorzugter Ausgestaltung ist aber die Kunststofffolie mehrschichtig, insbesondere zweischichtig, dreischichtig oder vierschichtig ausgebildet. Für die Erstellung der Schichten der Kunststofffolie gibt es ebenfalls mehrere Möglichkeiten. Beispielsweise kann die mehrschichtige Kunststofffolie laminiert oder kaschiert sein. Vorzugsweise handelt es sich aber um eine mehrschichtige koextrudierte Kunststofffolie.

In einer mehrschichtigen Kunststofffolie können die einzelnen Schichten gezielt an unterschiedliche gewünschte Eigenschaften angepasst werden. So wird im Rahmen der Erfindung vorzugsweise die dem Vlies zugewandte Schicht aus einem geeigneten Material hergestellt, welches das einfache und zuverlässige Verschweißen mit dem Vlies ermöglicht und/oder geeignet ist, um die Kontaktfläche der Rücklage mit der Rückseite des Fahrzeugsitzes auszubilden. Andere Kriterien für die Wahl der Dicke und/oder Materialien der Schichten können die gewünschte Elastizität, Steifigkeit, Rissfestigkeit, Beständigkeit gegen Sonneneinstrahlung, Haptik, Beständigkeit gegenüber aggressiven Medien oder Öl u. ä. sein.

Grundsätzlich gibt es beliebige Möglichkeiten für die Ausgestaltung der Materialien der einzelnen Schichten der Kunststofffolie. Gemäß einem Vorschlag der Erfindung sind eine dem Vlies zugekehrte obere Schicht der Kunststofffolie und eine untere Schicht der Kunststofffolie mit demselben Material gebildet. Dieser Ausgestaltung liegt die Erkenntnis zugrunde, dass grundsätzlich die obere Schicht und die untere Schicht von außen zugänglich sind, so dass diese unter Umständen denselben Anforderungen genügen müssen. Andererseits kann es von Vorteil sein, wenn die Kunststofffolie zumindest hinsichtlich der äußeren Schichten gewissen Anforderungen hinsichtlich der "Symmetrie" unterliegt, indem diese mit demselben Material gebildet sind. Beispielsweise ist es von Vorteil, wenn die äußeren Schichten denselben Wärmeausdehnungskoeffizienten besitzen, da ansonsten bei einer Temperaturänderung der Kunststofffolie eine Krümmung der Kunststofffolie (Ausbildung eines so genannten "Curls") entsprechend den unterschiedlichen Wärmeausdehnungskoeffizienten erfolgt.

Während grundsätzlich für die Schichten und insbesondere die obere Schicht beliebige Materialien einsetzbar sind, schlägt die Erfindung in weiterer Ausgestaltung vor, dass die dem Vlies zugekehrte obere Schicht mit Polypropylen gebildet ist. Dies ist insbesondere dann von Vorteil, wenn das Vlies mit Fasern aus Polypropylen gebildet ist. Dieser Ausgestaltung liegt die Erkenntnis zugrunde, dass das Verschweißen vereinfacht oder erst ermöglicht wird, wenn für die zu verschweißenden Materialien, nämlich das Vlies einerseits und die Kunststofffolie andererseits, gleiche oder "artverwandte" Materialien verwendet sind.

Grundsätzlich ist eine mit Polypropylen gebildete Schicht unter Umständen steif und/oder rissanfällig. Um dennoch eine hinreichende Elastizität der Rücklage bereitzustellen, müsste eine obere Schicht aus Polypropylen grundsätzlich sehr dünn ausgebildet sein. Eine besondere Ausgestaltung der Erfindung schlägt vor, dass die obere Schicht, die mit Polypropylen gebildet ist, mit einem elastisch modifizierten Polypropylen gebildet ist. Insbesondere kann ein Polypropylen-Copolymer Einsatz finden. Eine derartige Ausgestaltung gewährleistet einerseits die gute Verschweißbarkeit insbesondere mit einem Vlies mit Fasern aus Polypropylen. Andererseits kann je nach Wahl und Anteil des elastisch modifizierten Polypropylens gezielt die Elastizität und Rissfestigkeit dieser Schicht (und damit der gesamten Kunststofffolie) beeinflusst werden.

Durchaus möglich ist, dass die Vorderlage vollständig aus dem Vlies besteht. In weiterer Ausgestaltung der Erfindung ist lediglich ein Teil der Vorderlage aus dem Vlies hergestellt, während ein anderer Teil oder der verbleibende Teil der Vorderlage aus einer oder der Kunststofffolie gebildet ist. Unter Umständen kann hierdurch eine Kostenersparnis erzielt werden, da im Vergleich zur Kunststofffolie das Vlies verhältnismäßig teuer ist. Andererseits kann gezielt in einzelnen Teilbereichen der Vorderlage einerseits eine Nutzung der Materialeigenschaften des Vlieses und andererseits der Kunststofffolie erfolgen. Durchaus möglich ist, dass durch den Teil der Vorderlage, der aus einer Kunststofffolie gebildet ist, der Fahrzeugsitz sichtbar ist.

Um lediglich ein Beispiel für eine derartige Ausgestaltung zu nennen, kann ein Sitzteil der Vorderlage (also der Teil der Vorderlage, welcher das Sitzpolster des Fahrzeugsitzes abdeckt) aus dem Vlies gebildet sein, während ein Rückenteil der Vorderlage (also der Teil der Vorderlage, welcher die Rückenlehne abdeckt) oder ein Teil des Rückenteils der Vorderlage aus der Kunststofffolie gebildet sein.

Die Erfindung umfasst die Ausbildung der zuvor genannten Bestandteile des Fahrzeugsitz-schutzbezugs, für welche Vlies als Material angegeben ist, sowie der Bestandteile, welche aus der Kunststofffolie hergestellt sind, mit einem einzigen Vliesmaterial und einer einzigen Kunststofffolie. Allerdings ist ebenfalls von der Erfindung umfasst, dass das "Vlies" mit mehreren Teilbereichen unterschiedlicher Vliesmaterialien gebildet ist und/oder die "Kunststofffolie" aus mehreren unterschiedlichen Kunststofffolienstücken gleicher oder unterschiedlicher Schichten, Schichtzahlen und/oder Materialien zusammengesetzt ist.

Grundsätzlich besitzt das Vlies unter Umständen bereits Ausnehmungen, welche eine Atmungsaktivität gewährleisten. In bevorzugter Ausgestaltung der Erfindung ist das Vlies mit durchgängigen Ausnehmungen ausgestattet, welche die Atmungsaktivität des Vlieses bereitstellen oder erhöhen. Hierbei besitzen diese Ausnehmungen vorzugsweise gleiche Querschnitte. Um lediglich ein nicht beschränkendes Beispiel zu nennen, kann das Vlies während des Herstellungsprozesses oder auch im Herstellungsprozess des Fahrzeugsitz-Schutzbezugs oder auf einem Förderweg mit Walzen und im Bereich der Walzen angeordneten Vorsprüngen oder Nadeln "durchstochen" werden, so dass sich die genannten durchgängigen Ausnehmungen ergeben.

Für die Gestaltung des Vlieses und dessen Aufbau und Geometrie gibt es vielfältige Möglichkeiten. Für eine besondere Ausgestaltung der Erfindung ist das Vlies mit unterschiedlichen Teilbereichen ausgebildet: Erste Teilbereiche besitzen eine erste Dicke. In zweiten Teilbereichen sind konkave Wölbungen vorhanden, wobei derartige konkave Wölbungen lediglich auf der der Kunststofffolie zugewandten Seite des Vlieses vorhanden sein können oder auf beiden Seiten des Vlieses. Im Bereich dieser zweiten Teilbereiche ist das Vlies verdichtet. Als Folge der Wölbungen und der Verdichtung besitzt das Vlies in den zweiten Teilbereichen eine zweite Dicke, welche kleiner ist als die erste Dicke in den ersten Teilbereichen. Eine Verschweißung des Vlieses mit der Kunststofffolie erfolgt für diese Ausgestaltung (ausschließlich oder vorrangig) im Bereich der ersten Teilbereiche. Möglich ist hierbei, dass die ersten und zweiten Teilbereiche gleichmäßig oder ungleichmäßig über das Vlies verteilt sind. Die genannten beiden Teilbereiche erfüllen für diese erfindungsgemäße Ausgestaltung unterschiedliche Funktionen: Im Bereich der ersten Teilbereiche, in welchen keine zusätzliche Verdichtung des Vlieses erfolgt ist, besitzen die Fasern des Vlieses einen (vergrößerten) Abstand voneinander. Diese Abstände der Fasern sind geeignet, um mit der Verschweißung Material der Kunststofffolie eintreten zu lassen, welches dann die Fasern des Vlieses im Bereich des ersten Teilbereichs einbetten und/oder umschließen kann, womit die eigentliche Verschweißung erfolgt. In diesem Teilbereich mit verhältnismäßig "losen" Fasern könnte aber eine Belastung der Verschweißung dazu führen, dass die verschweißten Fasern des ersten Teilbereichs von dem Vlies gelöst werden, womit die Verschweißung versagen würde. Erfindungsgemäß wird der Zusammenhalt des Vlieses dadurch gewährleistet, dass Fasern des ersten Teilbereichs, welche wie erläutert die Verschweißung gewährleisten, sich bis in den zweiten Teilbereich erstrecken, wo diese im Bereich der konkaven Wölbungen verdichtet und/oder verpresst sind, womit ein verstärkter Zusammenhalt gewährleistet ist.

Eine weitere Lösung der der Erfindung zugrunde liegenden Aufgabe ist gegeben durch ein Verfahren zur Herstellung eines Fahrzeugsitz-Schutzbezugs, insbesondere eines Fahrzeugsitz-Schutzbezugs, wie dieser zuvor erläutert worden ist. Im Rahmen dieses erfindungsgemäßen Verfahrens findet ein Schweißprozess Einsatz, mittels dessen eine Verschweißung der mit dem Vlies gebildeten Vorderlage mit der Rücklage erfolgt.

Grundsätzlich ist der Einsatz eines beliebigen Schweißverfahrens zur Verschweißung der mit dem Vlies gebildeten Vorderlage mit der Rücklage möglich. Um lediglich einige nicht beschränkende Beispiele zu nennen, kann ein Thermotransfer-Verfahren Einsatz finden. Dabei wird ein Heizdraht oder anderes Heizelement eingesetzt, über das der Schweißprozess verursacht wird. Das Heizelement wird mittels einer elektrischen Heizung erwärmt und die erwärmte Oberfläche mit Druck auf das zu verschweißende Material aufgebracht. Vorzugsweise ist das Heizelement in einem derartigen Fall beschichtet, um ein Anhaften erwärmten Materials zu vermeiden. Beispielsweise kann hierzu eine Beschichtung aus oder mit Teflon oder einem Polytetrafluorethylen-Gewebe Einsatz finden. Vorzugsweise ist im Bereich der Verschweißung eine Überlappung der miteinander zu verschweißenden Lagen gegeben. Im Bereich der Überlappung erfolgt dann die Erwärmung und eine Verschmelzung des randseitigen Material der beiden Lagen. Um lediglich einige weitere Möglichkeiten zu nennen, kann in dem Schweißprozess Heizluft und/oder Ultraschall verwendet werden.

Grundsätzlich kann der Wärmeeintrag für die Herbeiführung des Verschweißens aus beliebiger Richtung erfolgen. In bevorzugter Ausgestaltung der Erfindung erfolgt der Wärmeeintrag aus Richtung der Rücklage, womit vermieden ist, dass die Vorderlage und das in dieser eingesetzte Vlies übermäßig dem Wärmeeintrag ausgesetzt ist. Vorzugsweise ist die Rücklage so ausgebildet, dass sie eine gute Wärmeleitfähigkeit aufweist. Da die Wärmeleitung nicht durch das Vlies erfolgt, bleibt dessen Struktur auch im Bereich der Verschweißung erhalten. Die Folie der Rücklage geht durch die Erwärmung in einen plastischen Zustand über, so dass die Fasern des Vlieses durch den ausgeübten Druck partiell in die Folie eindringen können. Möglich ist, dass sich Im weiteren Verlauf des Schweißprozesses auch die Fasern des Vlieses untereinander verbinden, so dass Vlies und Folie fest verbunden werden. Vorzugsweise erfolgt die Gestaltung des Wärmeeintrags und des hieraus resultierenden Temperaturverlaufes derart, dass eine Zerstörung der Fasern des Vlieses vermieden ist.

Grundsätzlich möglich ist, dass die Verschweißung ausschließlich durch Applikation von Wärme und/oder Druck erfolgt. In bevorzugter Weiterbildung des erfindungsgemäßen Verfahrens erfolgt allerdings zum Verschweißen auf einer Seite des zu erstellenden Verbundes aus Vlies und Kunststofffolie ein Wärmeeintrag, während auf der anderen Seite eine Kühlung erfolgt. Hierdurch werden erfindungsgemäß insbesondere erweiterte Möglichkeiten für
- eine Gestaltung des Temperaturgangs der Kunststofffolie einerseits und des Vlieses andererseits,
- für die Vorgabe der Zeitspanne, die für ein Plastifizieren des Materials für die Verschweißung erforderlich ist, und/oder
- die Gestaltung von Temperaturgradienten in den Materialien
geschaffen. Um lediglich ein nicht beschränkendes Beispiel zu nennen, kann die Erwärmung von der Seite der Rücklage und damit im Bereich der Kunststofffolie erfolgen, während die Kühlung von der freien Außenseite des Vlieses erfolgt, womit eine übermäßige Erwärmung des Vlieses vermieden werden kann, welche zu einer Beschädigung der Fasern des Vlieses führen könnte. Hierzu kann auch eine gekühlte oder temperierte Oberfläche Einsatz finden, über welche gleichzeitig ein Gegendruck ausgeübt wird.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Vlies oder einer Kunststofffolie die Rede ist, ist dies so zu verstehen, dass genau ein Vlies oder eine Kunststofffolie, zwei Vliese oder zwei Kunststofffolien oder mehr Vliese oder Kunststofffolien vorhanden sein können. Diese Merkmale können durch andere Merkmale ergänzt werden oder die einzigen Merkmale sein, aus denen das jeweilige Erzeugnis besteht.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Draufsicht auf einen flach liegenden Fahrzeugsitz-Schutzbezug, und zwar auf dessen Rücklage.
- **Fig. 2**: zeigt einen Schnitt gemäß der Schnittlinie II-II in Fig. 1.
- **Fig. 3**: zeigt eine schematisierte Seitenansicht eines Fahrzeugsitzes mit dem übergestülpten Fahrzeugsitz-Schutzbezug.
- **Fig. 4**: zeigt einen Schnitt durch den Fahrzeugsitz-Schutzbezug im Bereich einer Schweißnaht gemäß der Schnittlinie IV-IV in Fig. 1.
- **Fig. 5**: zeigt eine alternative Ausführungsform eines Fahrzeugsitz-Schutzbezugs bei Schnittführung entsprechend der Schnittlinie II-II in Fig. 1.
- **Fig. 6**: zeigt eine alternative Ausführungsform eines Fahrzeugsitz-Schutzbezugs bei Schnittführung entsprechend der Schnittlinie II-II in Fig. 1.
- **Fig. 7**: zeigt ein Blockdiagram eines Verfahrens zur Herstellung des Fahrzeugsitz-Schutzbezuges.
- **Fig. 8**: zeigt einen Schnitt durch den Fahrzeugsitz-Schutzbezug grundsätzlich entsprechend Fig. 4, wobei hier eine andere Ausgestaltung eines Vlieses eingesetzt ist.

### FIGURENBESCHREIBUNG

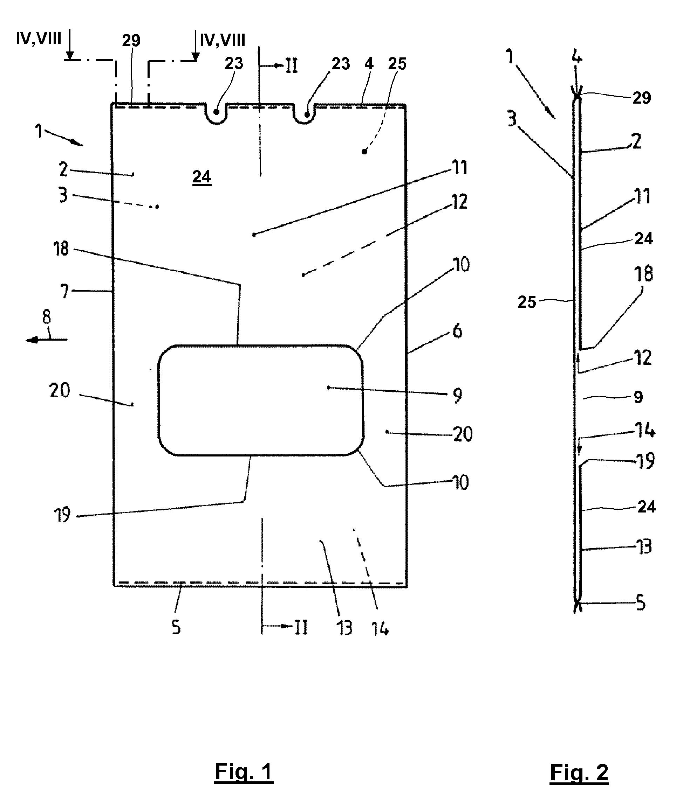

Der in **Fig. 1** in flachliegendem Zustand dargestellte Fahrzeugsitz-Schutzbezug 1 besteht aus einer mehrschichtigen Kunststofffolie 24 und einem Vlies 25. Die Draufsicht zeigt die Ansicht von rückwärts, also die unmittelbare Draufsicht auf eine Rücklage 2. In dieser Draufsicht befindet sich unter der Rücklage 2 als weitere Lage eine Vorderlage 3. Für das dargestellte Ausführungsbeispiel besteht die Vorderlage 3 aus dem Vlies 25 und die Rücklage 2 besteht aus der Kunststofffolie 24. Die Rücklage 2 und die Vorderlage 3 bilden ein zusammenhängendes Verbundstück, wobei die Rücklage 2 mit der Vorderlage 3 über eine erste Längsschweißung 4 in Verbindung steht. Auf der anderen Längsseite sind Rücklage 2 und Vorderlage 3 über eine zweite Längsschweißung 5 in Form einer durchgehenden Längsschweißnaht ebenfalls verbunden. Obwohl diese Längsschweißungen 4 und 5 entsprechend den gestrichelte Linien unterbrochen ausgebildet sein können, ist es auch möglich, diese Längsschweißungen 4 und 5 durchgehend, also ohne Unterbrechungsstellen, auszubilden. Außer im Bereich der Längsschweißung 4 und der Längsschweißung 5 ist die Rücklage 2 mit der Vorderlage 3 jedoch auch noch über zwei Querschweißungen 6 und 7 verbunden. Die Querschweißungen 6 und 7 schließen an die Längsschweißung 4 an und erstrecken sich bis zur Längsschweißung 5. Insbesondere sind die Rücklage 2 und die Vorderlage 3 entlang ihres Umrisses durchgehend miteinander verbunden. Die Bezeichnungen längs und quer sind hierbei mit Hinblick auf eine Förderrichtung gemäß Pfeil 8 gewählt, also eine Richtung, in der eine Endlosbahn bei der Herstellung einzelner Fahrzeugsitz-Schutzbezüge verarbeitet wird. Die Längsschweißung 4 und die Längsschweißung 5 erstrecken sich somit parallel zu dem Pfeil 8, während die Querschweißungen 6 und 7 quer dazu verlaufen. Bei der Herstellung kann eine Flachfolie für die Rücklage 2 eingesetzt werden. Es ist aber durchaus auch möglich, dass eine Fertigung mit einer Förderrichtung des Fahrzeugsitz-Schutzbezugs 1 erfolgt, welche vertikal zu Pfeil 8 orientiert ist (und in der Zeichenebene gemäß Fig. 1 liegt).

In der Rücklage 2 ist eine randgeschlossene Ausnehmung 9 mit abgerundeten Ecken 10 vorgesehen. Diese Ausnehmung 9 weist in etwa rechteckförmigen Umriss auf und ist im inneren Feld der Rücklage 2, also mit Abstand zu der Längsschweißung 4, der Längsschweißung 5 und auch den Querschweißungen 6 und 7 angeordnet. Wie man erkennt, ist diese Ausnehmung 9, die durch einen Ausschnitt oder einen Anschnitt gebildet werden kann, nicht in der Mitte symmetrisch vorgesehen, sondern in Richtung auf die Längsschweißung 5 verschoben angeordnet. Die Vorderlage 3 besitzt keine solche Ausnehmung, sondern ist ganzflächig durchgehend vorgesehen.

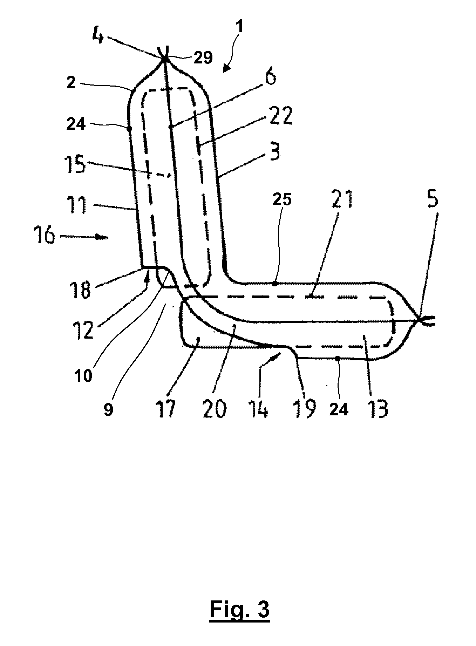

Ein Bereich 11 der Rücklage 2 bildet mit dem darunterliegenden Bereich der Vorderlage 3 eine erste Tasche 12. Ein Bereich 13 der Rücklage 2 bildet mit einem entsprechenden Bereich der Vorderlage 3 eine zweite Tasche 14 unterhalb der Ausnehmung 9. Durch die exzentrische Anordnung der Ausnehmung 9 ist die obere Tasche 12 vergleichsweise tiefer oder länger als die untere Tasche 14 ausgebildet. Die obere Tasche 12 dient zur Aufnahme bzw. Umhüllung einer Rückenlehne 15 (**Fig. 3**) eines Fahrzeugsitzes 16, während die untere Tasche 14 über das zugehörige Sitzpolster 17 des Fahrzeugsitzes 16 gestülpt wird.

Durch die Ausnehmung 9 besitzt die Tasche 12 einen freien Rand 18 und die Tasche 14 einen freien Rand 19, die sich im Wesentlichen parallel zu dem Pfeil 8 erstrecken. Die beiden Ränder 18 und 19 bzw. die Bereiche 11 und 13 der Rücklage 2 sind über Verbindungsstreifen 20 miteinander verbunden. Diese Verbindungsstreifen 20 sind Bestandteil der Rücklage 2. Die Querschweißungen 6 und 7 sind hier durchgehend vorgesehen, so dass auch die Verbindungsstreifen 20 mit der Vorderlage 3 verbunden sind. Es sind die Verbindungsstreifen 20, die den Fahrzeugsitz 16 im Übergangsbereich zwischen Sitzpolster 17 und Rückenlehne 15 umgreifen oder hintergreifen und damit vor Verschmutzung schützen (Fig. 3). Die Vorderlage 3 erstreckt sich in der übergestülpten Stellung des Fahrzeugsitz-Schutzbezugs 1 an dem Fahrzeugsitz 16 über die Sitzfläche 21 des Sitzpolsters 17 und über die Lehnfläche 22 der Rückenlehne 15, die mit dem Rücken des Benutzers des Fahrzeugsitzes in Wirkverbindung tritt. Die Rücklage 2 hingegen hintergreift die Rückenlehne 15 und untergreift das Sitzpolster 17.

Gleichzeitig mit dem Anbringen der Ausnehmung 9 können auch zwei Ausstanzungen 23 im Bereich der Längsschweißung 4 angebracht werden, die für die Montage einer Kopfstütze auf der Rückenlehne 15 bestimmt sind.

Anhand der Schnittdarstellung der **Fig. 2** ist die doppellagige Ausbildung des Fahrzeugsitz-Schutzbezugs 1 nochmals verdeutlicht, wobei hier der Übersichtlichkeit halber die Verbindungsstreifen 20 nicht dargestellt sind.

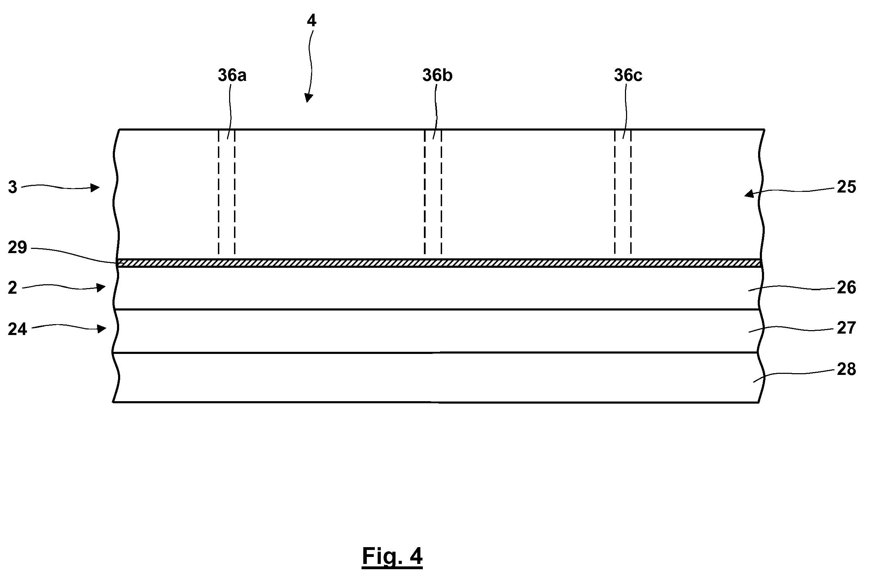

**Fig. 4** zeigt einen Ausschnitt des Fahrzeugsitz-Schutzbezugs 1 im Bereich einer Verschweißung, beispielsweise der Längsverschweißung 4. Dargestellt ist ein Detail eines Schnitts durch den Fahrzeugsitz-Schutzbezug 1 entsprechend der Schnittlinie IV-IV im Bereich einer Schweißnaht 29. Die Schweißnaht 29 verbindet die Kunststofffolie 24 mit dem Vlies 25, welche in diesem Bereich überlappend angeordnet sind. Die Kunststofffolie 24 ist hier dreischichtig ausgebildet mit einer oberen Schicht 26, einer mittleren Schicht 27 und einer unteren Schicht 28.

Die dem Vlies 25 zugewandte obere Schicht 26, die mittlere Schicht 27 und die dem Vlies abgewandte untere Schicht 28 können grundsätzlich aus einem oder unterschiedlichen beliebigen Kunststoff/Kunststoffen gebildet werden, wie beispielsweise Polyamid oder PET, bevorzugt aus einem Polyolefin, bspw. Polypropylen oder Polyethylen.

Das Vlies 25 kann aus unterschiedlichen Fasern bestehen, so beispielsweise Polyethylen, PET oder Polyamid. Bevorzugt wird die Verwendung von Polypropylen. Die obere Schicht 26 bildet einen unmittelbaren Kontakt mit dem Vlies 25 aus. Zur Optimierung des Schweißprozesses ist es vorteilhaft, die mit dem Vlies 25 in Kontakt stehende obere Schicht 26 ebenfalls aus Polypropylen auszubilden. Vorteilhaft ist hierbei die Zugabe eines elastischen modifizierten Polypropylens, insbesondere eines Polypropylen-Copolymers. Das elastisch modifizierte Polypropylen hat bevorzugt einen Massenanteil von 10 % bis 50 % an der Schicht 26. Das Flächengewicht des Vlieses 25 beträgt vorzugsweise 20 bis 100 g/m², besonders bevorzugt 35 bis 70 g/m², bspw. 40 bis 60 g/m² oder 45 bis 55 g/m².

Vorzugsweise findet für die mittlere Schicht 27 Polyethylen Einsatz, insbesondere ein lineares Polyethylen mit geringer Dichte (LLDPE), da dies eine besondere Festigkeit gegen Punktbelastungen aufweist und eine besondere Elastizität besitzt. Vorteilhaft ist die Mischung mit einem elastischen Copolymer, um eine hohe Dehnfähigkeit zu erzielen. Dabei kann der Massenanteil des elastischen Copolymers beispielsweise 10 % bis 50 % betragen.

Vorzugsweise ist die untere Schicht 28 aus demselben Material ausgebildet wie die obere Schicht 26. Möglich ist auch, dass die untere Schicht 28 zusätzlich mit einem antistatischen Additiv, insbesondere einem hydrophilen und/oder leitfähigen Additiv, versehen ist.

In einer solchen dreischichtig ausgebildeten Kunststofffolie 24 kann beispielsweise die mittlere Schicht 27 40 bis 80 % der Dicke der Kunststofffolie 24 einnehmen, während die obere Schicht 26 und die untere Schicht 28 die gleiche Dicke oder unterschiedliche Dicken aufweisen können.

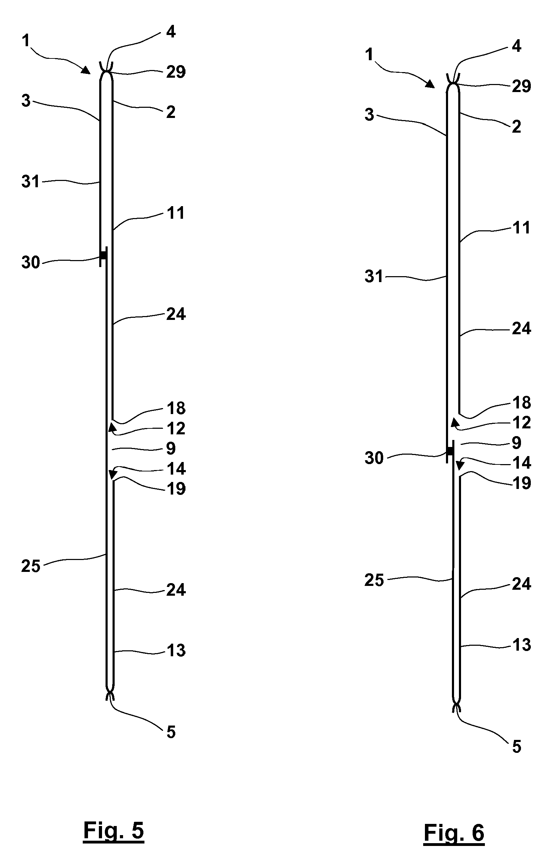

In **Fig. 5** und **Fig. 6** ist eine Seitenansicht dargestellt, die analog zu Fig. 2 als Schnitt entlang der Schnittlinie II-II gezeigt wird. Fig. 5 und Fig. 6 zeigen Ausführungsformen des Fahrzeugsitz-Schutzbezugs 1, bei denen sich das Vlies 25 nicht über die gesamte Vorderlage 3 erstreckt. Die Rücklage 2 ist in den dargestellten Ausführungsformen vollständig aus der Kunststofffolie 24 gebildet. Die Vorderlage 3 ist von der Längsschweißung 5 bis zu einer zusätzlichen, ebenfalls in Längsrichtung orientierten Schweißung 30 aus dem Vlies 25 gebildet. An der Schweißung 30 ist das Vlies 25 verschweißt mit einer weiteren, beliebig ausgebildeten Kunststofffolie 31, welche sich von der Schweißung 30 bis zu der Längsschweißung 4 erstreckt. Möglich ist aber auch, dass die Kunststofffolie 24 sich von dem Bereich 11 der Rücklage 2 durchgehend bis zu der Schweißung 30 erstreckt, womit die Längsschweißung 4 entfällt und die Kunststofffolie 24 auch einen Teil der Vorderlage 3 bildet.

In Fig. 5 ist die Schweißung 30 etwa auf halber Höhe der Tasche 12 angeordnet, so dass sie sich in einer übergestülpten Position des Fahrzeugsitz-Schutzbezugs 1 etwa auf halber Höhe der Rückenlehne 15 befindet. Das Sitzpolster 17 und ein unterer Teil der Rückenlehne 15 werden somit von dem Vlies 25 bedeckt, während ein oberer Teil der Rückenlehne 15 von der Kunststofffolie 31 bedeckt ist.

Die in Fig. 6 dargestellte Schweißung 30 befindet sich auf Höhe der Ausnehmung 9 und damit zwischen den Taschen 12 und 14. In einer übergestülpten Position befindet sich die dargestellte Schweißung 30 also etwa im Bereich des Übergangs von der Rückenlehne 15 zu dem Sitzpolster 17. Das Vlies 25 bedeckt in diesem Fall das Sitzpolster 17, während die Rückenlehne 15 von der Kunststofffolie 31 bedeckt wird. Selbstverständlich sind andere Positionen der Schweißung 30 denkbar als die in Fig. 5 und Fig. 6 dargestellten. Ebenfalls möglich ist, dass weitere Teilbereiche mit Vlies und/oder einer Kunststofffolie gebildet sind, welche über zusätzliche Schweißungen miteinander verbunden sind. So kann beispielsweise ein Teilbereich zum Abdecken einer Kopfstütze ebenfalls mit einem Vlies gebildet sein, während die Rückenlehne 15 von einer Kunststofffolie abgedeckt ist. Während hier im Wesentlichen eine Teilung der Vorderlage 3 in "Längsstreifen" erläutert worden ist, kann auch eine Unterteilung in unterschiedliche "Querstreifen" oder eine beliebige andere Unterteilung erfolgen.

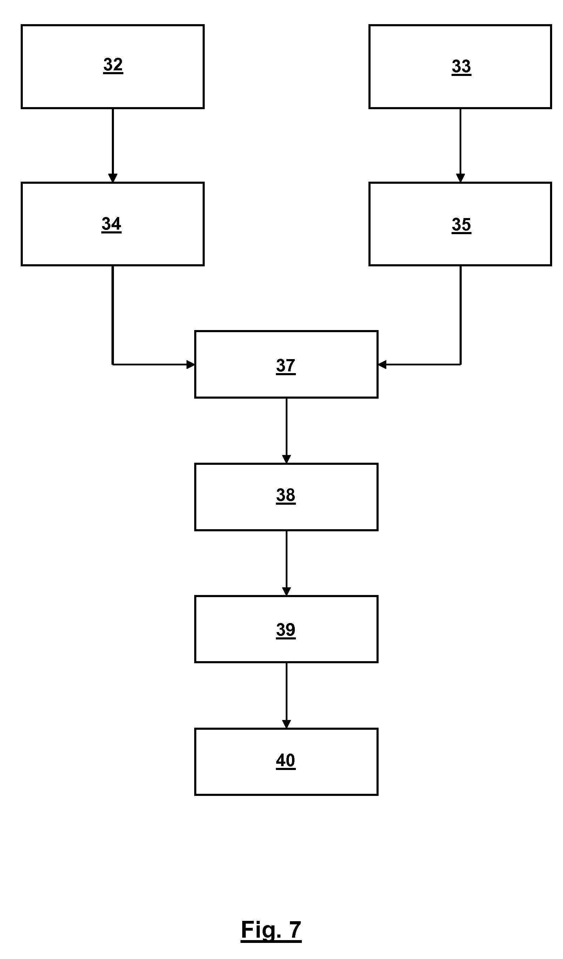

**Fig. 7** zeigt ein Verfahren zur Herstellung eines erfindungsgemäßen Fahrzeugsitz-Schutzbezugs 1. Kunststofffolie 24 und Vlies 25 werden zunächst in Verfahrensschritten 32, 33 getrennt hergestellt oder bereitgestellt. Das Vlies 25 kann beispielsweise auf Rollen angeliefert werden oder vor Ort hergestellt werden. Die Kunststofffolie 24 wird beispielsweise durch Koextrusion vor Ort hergestellt.

An der Kunststofffolie 24 können in einem Verfahrensschritt 34 weitere Bearbeitungsschritte vorgenommen werden. So wird beispielsweise die Ausnehmung 9 durch Ausstanzen oder Ausschneiden eingebracht. Ebenso können nötigenfalls weitere Ein- oder Zuschnitte erfolgen.

In einem Verfahrensschritt 35 erfolgt eine weitere Bearbeitung des Vlieses 25, beispielsweise durch Erzeugen von Ein- und Zuschnitten. Durchgehende Ausnehmungen, die in Fig. 4 gestrichelt als Ausnehmungen 36a, 36b, 36c, vorzugsweise mit gleichen Querschnitten und Abständen, dargestellt sind, können beispielsweise durch den Herstellungsprozess des Vlieses 25 bedingt bereits im Vlies 25 vorhanden sein. Die Ausnehmungen 36a,b,c können aber auch beispielsweise durch die Behandlung mit Nadelwalzen gebildet werden.

In einem Verfahrensschritt 37 werden die vorbereiteten Bahnen von Kunststofffolie 24 und Vlies 25 unter Erzeugung von Überlappungen zusammengebracht und durch Anbringung der Längsschweißung 4 und der Längsschweißung 5 im Bereich der Überlappungen in einem Verfahrensschritt 38 miteinander verbunden. Durch Anbringung der Querschweißung 6 und der Querschweißung 7 können das Vlies 25 und die Kunststofffolie 24 zu einem in seinem Umfang geschlossenen Fahrzeugsitz-Schutzbezug 1 verschweißt werden. Gegebenenfalls können in einem Verfahrensschritt 39 weitere Ein- oder Zuschnitte und beispielsweise Ausstanzungen an Vlies 25 und/oder Kunststofffolie 24 erfolgen, die beispielsweise für eine Durchführung eines Gurtschlosses im Betrieb bestimmt sind. Beispielsweise können Vlies 25 und Kunststofffolie 24 ausgehend von der Längsschweißung 4 auch so angeschrägt werden, dass ihre Form einem Fahrzeugsitz-Modell individuell angepasst wird. Dies geschieht gegebenenfalls unter Bildung eines Abfallstücks. In diesem Fall wird für die Querschweißung 6 und die Querschweißung 7 ein Abknicken folgend einer Kontur des Fahrzeugsitz-Schutzbezugs 1 vorgesehen. Möglich ist, dass zwischen einer Querschweißung 6 eines ersten Fahrzeugsitz-Schutzbezugs und einer Querschweißung 7 eines benachbarten Fahrzeugsitz-Schutzbezugs ein Durchtrennen erfolgt. Alternativ kann das Einbringen einer Perforation erfolgen, um bei Bereitstellung mehrerer Fahrzeugsitz-Schutzbezüge 1 in Form einer Bahn bedarfsgerecht ein sukzessives Abreißen eines Fahrzeugsitz-Schutzbezuges am Nutzungsort zu ermöglichen. Die verschweißten und getrennten Fahrzeugsitz-Schutzbezüge 1 werden in einem Verfahrensschritt 40 gestapelt und zu verkaufsfertigen Einheiten verpackt. Wurden die Fahrzeugsitz-Schutzbezüge 1 mit einer Perforation versehen, so können diese in dem Verfahrensschritt 40 auch aufgerollt und als Rolle für den Verkauf vorgesehen werden.

Weitere Verfahrensschritte können den in DE 199 23 889 C2 beschriebenen Verfahrensschritten entsprechen.

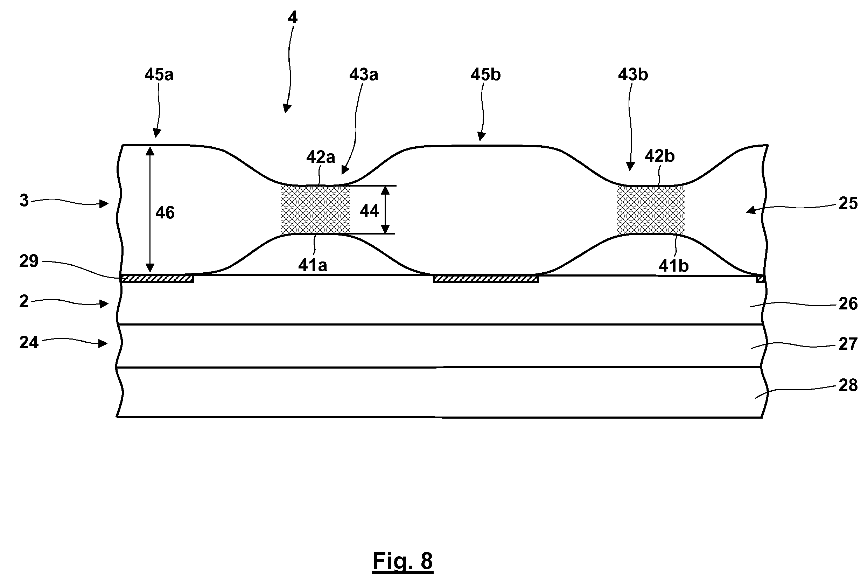

**Fig. 8** zeigt eine Schweißnaht 29 zwischen einer Kunststofffolie 24 und einem Vlies 25, welches anders als in Fig. 4 dargestellt ausgebildet ist: Während gemäß Fig. 4 das Vlies 25 mit konstanter Dicke 46 ausgebildet ist, besitzt das Vlies 25 gemäß Fig. 8 auf der der Kunststofffolie 24 zugewandten Seite konkave Wölbungen 41 a, 41 b ... Durchaus möglich ist, dass das Vlies 25 auf der der Kunststofffolie 24 abgewandten Seite weitestgehend eben ausgebildet ist. Für das in Fig. 8 dargestellte Ausführungsbeispiel besitzt das Vlies 25 aber auch auf dieser Seite Wölbungen 42a, 42b, ..., welche hier an den den Wölbungen 41a, 42b, ... entsprechenden Orten angeordnet sind. Im Bereich der Wölbungen 41 a, 41 b (und hier auch den Wölbungen 42a, 42b, ...) sind zweite Teilbereiche 43a, 43b gebildet. In den Teilbereichen 43 ergibt sich infolge der Wölbungen 41, 42 eine zweite Dicke 44. Abseits der Wölbungen 41, 42 bildet das Vlies 25 erste Teilbereiche 45a, 45b, ... aus, im Bereich welcher das Vlies 25 eine erste Dicke 46 besitzt, die größer ist als die zweite Dicke 44.

In den Teilbereichen 45 liegen die Fasern des Vlieses 25 lediglich mit geringer Anpresskraft, lose oder sogar mit einem Abstand übereinander, wobei sich abseits von Kreuzungspunkten weitere Lücken ergeben können. Im Bereich der Schweißnaht 29 tritt plastifiziertes Material der Schicht 26 in etwaige Zwischenräume des Vlieses 25 in den Teilbereichen 45 ein. Die hierdurch in die Schicht 26 eingebetteten Fasern der ersten Teilbereiche 45 besitzen zumindest teilweise eine Erstreckung derart, dass sich diese bis in die zweiten Teilbereiche 43 erstrecken, wo das Vlies 25 verdichtet ist, eine Verpressung der Fasern erfolgt ist oder sogar noch eine zusätzliche weitere Verbindung derselben erfolgt ist. Die Teilbereiche 43 dienen somit dazu, den Zusammenhalt der Fasern in dem Vlies 25 zu gewährleisten, während die Teilbereiche 45 das Verschweißen der Kunststofffolie 24 mit dem Vlies 25 ermöglichen. Wie in Fig. 8 dargestellt, kann sich zwischen den Teilbereichen 43 und der Kunststofffolie 24 ein Zwischenraum ergeben, ohne dass dieses zwingend erforderlich ist. Die Erstellung der Teilbereiche 43 kann beliebig erfolgen, insbesondere durch einen Kalandrier-Vorgang. Vorzugsweise beträgt die Erstreckung der Teilbereiche 43 einen Millimeter, während der Abstand benachbarter Teilbereiche 43a, 43b ca. 1,5 bis 2 Millimeter beträgt, wobei aber auch Abweichungen von ± 20 % oder ± 10 % von den zuvor angegebenen Werten möglich sind. Vorzugsweise ist der Abstand der Teilbereiche 43a, 43b kleiner als eine mittlere Faserlänge des Vlieses 25. Die Teilbereiche 43 können gleichmäßig und matrixartig über das Vlies 25 verteilt sein.

Für sämtliche dargestellte und/oder beschriebene Ausführungsformen kann die Dicke der Kunststofffolie 24 bspw. 35 bis 70 µm, bspw. 40 bis 60 µm oder 45 bis 55 µm betragen. Hingegen beträgt die Dicke 46 des Vlieses 25 vorzugsweise zwischen 250 und 350 µm, bspw. 270 bis 330 µm oder 285 bis 310 µm.

Unter einem Vlies wird im Sinne der vorliegenden Erfindung ein Gebilde aus Fasern, die auf eine beliebige Weise zusammengefügt und verbunden worden sind, verstanden. Dies schließt aber insbesondere ein Weben, ein Verschlingen oder eine Maschenbildung, wie sie etwa beim Wirken oder Stricken entsteht, aus. Die Fasern können jeweils eine begrenzte Länge besitzen oder endlos sein. Die Fasern können beliebigen Ursprungs sein, also aus Naturfasern oder Kunstfasern bestehen oder aus beliebigen Mischungen dieser zusammengesetzt sein. Ein Vlies kann lediglich durch die den Fasern eigene Haftung zusammengehalten werden. Es ist aber auch möglich, dass die Fasern durch ein aufgebrachtes Bindemittel verklebt werden.

Gemäß der DE 1 062 206 A werden vegetabilische Fasern wie Baumwolle oder Flachs, tierische Fasern wie Wolle, Kunstfasern wie Viskose-Acetatfasern, Polyamidfasern oder Fasern aus Polyvinyl- oder Polyvinylidenverbindungen, Proteinfasern wie Alginatfasern oder Caseinfasern oder mineralische Fasern wie Glaswolle oder Asbestfaser oder Mischungen der genannten Fasern durch Krempeln in dünne Faserflore überführt. Diese Faserflore werden nun in einer gewünschten Anzahl, je nach gewünschter Dicke des fertigen Vlieses, übereinander gelegt, wobei ihre Faserrichtungen sich jeweils kreuzen, und durch beheizte Presswalzen verbunden. Ein Imprägniermittel wird nun gleichmäßig so aufgebracht, dass es die gesamte Faserschicht gleichmäßig durchdringt. Als Imprägniermittel dienen zum Beispiel Butadien-Acrylnitril-Polymerisate, Butadien-Styrol-Polymerisate, deren Derivate oder Mischpolymerisate. Nach einer Wärmebehandlung, bei der das Vlies getrocknet und ggf. vulkanisiert wird, erhält man ein ungewebtes textilstoffartiges Gebilde, das hier als Vliesstoff bezeichnet wird.

Während grundsätzlich die Bezeichnung "Vlies" nur das Gebilde der Fasern benennt, wird hierunter in der vorliegenden Anmeldung auch ein "Vliesstoff" subsumiert, der durch industrielle Weiterverarbeitung entsteht. Das Vlies umfasst hierbei auch ein "nonwoven fabric". Nicht umfasst sind von einem erfindungsgemäßen Vlies Papiere - bei einem Papier beruht im Gegensatz zum Vlies der Zusammenhalt der Fasern auf Wasserstoffbrückenbindungen.

Vliese können rein mechanisch gebildet werden, entweder durch Kardieren oder indem die beim Kardieren oder Krempeln entstehenden Flore übereinander gelegt werden. Mittels eines Luftstroms können Fasern auf eine luftdurchlässige Unterlage geblasen werden. Die so gebildeten Vliese bezeichnet man als aerodynamisch gebildet. Sie gehören in diesem Fall ebenso zu den Trockenvliesen wie mechanisch gebildete Vliese. Im Falle von Polymerfasern können diese auch direkt nach ihrer Herstellung beim Austreten aus einer Düse durch einen heißen Luftstrom bis zum Zerreißen verstreckt und unmittelbar abgelegt werden, so dass sogenannte Schmelz-Blas-Vliese entstehen. Geschieht das Verstrecken durch kalte Luft oder mechanisch, so wird das entstehende Vlies als Spinnvlies bezeichnet. Schmelz-Blas-Vliese und Spinnvliese lassen sich durch Übereinanderlegen auch zu einem einzigen Vlies kombinieren. Fasern können auch in Wasser aufgeschwemmt und auf einer wasserdurchlässigen Unterlage abgelegt werden, in diesem Fall bezeichnet man das entstehende Vlies als hydrodynamisch gebildetes Vlies oder Nassvlies. Für Polymerfasern lässt sich dieses Verfahren auch kombinieren mit einem Spinnverfahren, so dass Nass-Spinnvliese erhalten werden. Polymerfasern können auch unter Einwirkung eines elektrischen Feldes abgelegt werden. In diesem Fall bezeichnet man das entstehende Vlies als elektrostatisch gebildetes Vlies. Man unterscheidet bei den Herstellungsarten zwischen Trockenverfahren, Nassverfahren und Extrusionsverfahren. Eine Verdichtung des Vliesstoffes kann auf verschiedenen Wegen erfolgen. Dazu gehören mechanische Verfahren, wie zum Beispiel Vernadeln oder Verwirbeln. Mechanisches Verfestigen durch Vernadeln erfolgt dadurch, dass eine große Zahl von fest zueinander angeordneten Nadeln wiederholt in das Vlies gestochen wird. Auf diese Weise entstehen im entstehenden Nadelvliesstoff durchgehende Ausnehmungen. Durch Zugabe von Zusatzstoffen, wie beispielsweise in der DE 1 062 206 A beschrieben, kann eine chemische Verfestigung erreicht werden. Sind thermoplastische Fasern oder thermoplastische Zusätze vorhanden, kann eine thermische Verfestigung des Vlieses erreicht werden.

Die Geometrie des Fahrzeugsitz-Schutzbezuges 1 ist in den Figuren u. U. lediglich schematisch dargestellt, wobei beliebige andere Geometrien ebenfalls möglich sein können. Der erfindungsgemäße Grundgedanke kann ebenfalls Einsatz finden für ein mit einem Fahrzeugsitz-Schutzbezug gebildetes Set von Schutzbezügen, wie dieses insbesondere in dem Patent DE 10 2009 045 963 B3 beschrieben ist.

### BEZUGSZEICHENLISTE

- 1: Fahrzeugsitz-Schutzbezug
- 2: Rücklage
- 3: Vorderlage
- 4: Längsschweißung
- 5: Längsschweißung
- 6: Querschweißung
- 7: Querschweißung
- 8: Pfeil
- 9: Ausnehmung
- 10: Ecke
- 11: Bereich
- 12: Tasche
- 13: Bereich
- 14: Tasche
- 15: Rückenlehne
- 16: Fahrzeugsitz
- 17: Sitzpolster
- 18: Rand
- 19: Rand
- 20: Verbindungsstreifen
- 21: Sitzfläche
- 22: Lehnfläche
- 23: Ausstanzung
- 24: Kunststofffolie
- 25: Vlies
- 26: obere Schicht
- 27: mittlere Schicht
- 28: untere Schicht
- 29: Schweißnaht
- 30: Schweißung
- 31: Kunststofffolie
- 32: Verfahrensschritt
- 33: Verfahrensschritt
- 34: Verfahrensschritt
- 35: Verfahrensschritt
- 36: Ausnehmung
- 37: Verfahrensschritt
- 38: Verfahrensschritt
- 39: Verfahrensschritt
- 40: Verfahrensschritt
- 41: Wölbung
- 42: Wölbung
- 43: Zweiter Teilbereich
- 44: Zweite Dicke
- 45: Erster Teilbereich
- 46: Erste Dicke

## Patentansprüche

1. Fahrzeugsitz-Schutzbezug (1) mit einer Vorderlage (3) und einer Rücklage (2), die mit einer Kunststofffolie (24) gebildet ist, wobei
a) die Vorderlage (3) mit einem Vlies (25) gebildet ist,
b) das Vlies (25) mit der oder einer Kunststofffolie (24) verschweißt ist,
c) die Rücklage (2) elastisch ist,
d) die Rücklage (2) eine Ausnehmung (9) aufweist, über die eine zwischen Vorderlage (3) und Rücklage (2) gebildete obere Tasche (12), die über eine Rückenlehne (15) eines Fahrzeugsitzes (16) gezogen werden kann, und eine zwischen Vorderlage (3) und Rücklage (2) gebildete untere Tasche (14), die über ein Sitzpolster (17) des Fahrzeugsitzes (16) gezogen werden kann, zugänglich ist
e) durch die Ausnehmung (9) die obere Tasche (12) einen ersten freien Rand (18) und die untere Tasche (14) einen zweiten freien Rand (19) besitzen,
f) die beiden Ränder (18, 19) der Rücklage über Verbindungsstreifen (20), die Bestandteil der Rücklage (2) sind, miteinander verbunden sind, und
g) die Verbindungstreifen (20) den Fahrzeugsitz im Übergangsbereich zwischen Sitzpolster und Rückenlehne umgreifen oder hintergeifen.

2. Fahrzeugsitz-Schutzbezug (1) nach einem der vorhergehenden Ansprüche, **dadurch gekennzeichnet, dass** das Vlies (25) Fasern aus Polypropylen besitzt.

3. Fahrzeugsitz-Schutzbezug (1) nach einem der vorhergehenden Ansprüche, **dadurch gekennzeichnet, dass** die Kunststofffolie (24) mehrschichtig gebildet ist.

4. Fahrzeugsitz-Schutzbezug (1) nach Anspruch 3, **dadurch gekennzeichnet, dass** eine dem Vlies (25) zugekehrte obere Schicht (26) der Kunststofffolie (24) und eine untere Schicht (28) der Kunststofffolie (24) mit demselben Material gebildet sind.

5. Fahrzeugsitz-Schutzbezug (1) nach Anspruch 3 oder 4, **dadurch gekennzeichnet, dass** die obere Schicht (26) mit Polypropylen gebildet ist.

6. Fahrzeugsitz-Schutzbezug (1) nach Anspruch 5, **dadurch gekennzeichnet, dass** die obere Schicht (26) mit einem elastisch modifizierten Polypropylen, insbesondere einem Poly-propylen-Copolymer, gebildet ist.

7. Fahrzeugsitz-Schutzbezug (1) nach einem der vorhergehenden Ansprüche, **dadurch gekennzeichnet, dass** ein Teil der Vorderlage (3) aus einer oder der Kunststofffolie (24) gebildet ist.

8. Fahrzeugsitz-Schutzbezug (1) nach Anspruch 7, **dadurch gekennzeichnet, dass** ein Sitzteil der Vorderlage (3) aus dem Vlies (25) gebildet ist und ein Rückenteil der Vorderlage (3) oder ein Teil des Rückenteils der Vorderlage (3) aus der Kunststofffolie (24) gebildet ist.

9. Fahrzeugsitz-Schutzbezug (1) nach einem der vorhergehenden Ansprüche, **dadurch gekennzeichnet, dass** das Vlies (25) durchgängige Ausnehmungen aufweist.

10. Fahrzeugsitz-Schutzbezug (1) nach einem der vorhergehenden Ansprüche, **dadurch gekennzeichnet, dass** das Vlies (25)
a) erste Teilbereiche (45) mit einer erste Dicke (46) besitzt und
b) zweite Teilbereiche (43) mit konkaven Wölbungen (41; 42) zumindest auf der der Kunststofffolie (24) zugewandten Seite besitzt, im Bereich welcher das Vlies (25) verdichtet ist und eine zweite Dicke (44) besitzt, die kleiner ist als die erste Dicke (46),
c) wobei eine Verschweißung im Bereich der ersten Teilbereiche (45) erfolgt.

11. Verfahren zur Herstellung eines Fahrzeugsitz-Schutzbezugs (1) nach einem der Ansprüche 1 bis 10, **dadurch gekennzeichnet, dass** die mit einem Vlies (25) gebildete Vorderlage (3) mit der Rücklage (2) verschweißt wird.

12. Verfahren zur Herstellung eines Fahrzeugsitz-Schutzbezugs (1) nach Anspruch 11, **dadurch gekennzeichnet, dass** ein Verschweißen der Vorderlage (3) mit der Rücklage (2) durch ein Thermotransfer-Verfahren erfolgt.

13. Verfahren zur Herstellung eines Fahrzeugsitz-Schutzbezugs (1) nach einem der Ansprüche 11 bis 12, **dadurch gekennzeichnet, dass** ein Wärmeeintrag aus Richtung der Rücklage (2) erfolgt.

14. Verfahren zur Herstellung eines Fahrzeugsitz-Schutzbezugs (1) nach einem der Ansprüche 11 bis 13, **dadurch gekennzeichnet, dass** zum Verschweißen auf einer Seite ein Wärmeeintrag erfolgt, während auf der anderen Seite eine Kühlung erfolgt.

## Claims

1. Protective cover (1) for a vehicle seat with a front sheet (3) and a rear sheet (2) formed with a plastic film (24) where
a) the front sheet (3) comprises a fleece, web or fabric (25),
b) the fleece, web or fabric (25) is welded or bonded to a plastic film (24),
c) the rear sheet (2) is elastic,
d) the rear sheet (2) comprises an opening (9) by which it is possible to gain excess to an upper pocket (12) formed between the front sheet (3) and the rear sheet (2) which can be pulled over the seat back (15) of a vehicle seat (16) and to a lower pocket (14) between the front sheet (3) and the rear sheet (2) which can be pulled over a seat cushion (17) of the vehicle seat (16),
e) due to the opening (9) the upper pocket (12) comprises a first free edge (18) and the lower pocket (14) comprises a second free edge (19),
f) the two edges (18, 19) of the rear sheet are connected to each other by connecting bands (20) which are part of the rear sheet (2) and
g) the connecting bands (20) reach, span around or engage behind the vehicle seat in the transitional region between the seat cushion and the seat back.

2. Protective cover (1) for a vehicle seat of claim 1, **characterised in that** the fleece, web or fabric (25) comprises fibres made of polypropylene.

3. Protective cover (1) for a vehicle seat of claim 1 or 2, **characterised in that** the plastic film (24) is formed with a plurality of layers.

4. Protective cover (1) for a vehicle seat of claim 3, **characterised in that** an upper layer (26) of the plastic film (24) turned towards the fleece, web or fabric (25) and a lower layer (28) of the plastic film (24) are made of the same materials.

5. Protective cover (1) for a vehicle seat of claim 3 or 4, **characterised in that** the upper layer (26) is made with polypropylene.

6. Protective cover (1) for a vehicle seat of claim 5, **characterised in that** the upper layer (26) is made of an elastically modified polypropylene, in particular of a polypropylene-copolymer.

7. Protective cover (1) for a vehicle seat of one of claims 1 to 6, **characterised in that** a part of the front sheet (3) is made of a or the plastic film (24).

8. Protective cover (1) for a vehicle seat of claim 7, **characterised in that** a seat part of the front sheet (3) is made of the fleece, web or fabric (25) and a rear part of the front sheet (3) or a part of the rear part of the front sheet (3) is made of the plastic film (24).

9. Protective cover (1) for a vehicle seat of one of claims 1 to 8, **characterised in that** the fleece, web or fabric (25) comprises through recesses.

10. Protective cover (1) for a vehicle seat of one of claims 1 to 9, **characterised in that** the fleece, web or fabric (25)
a) comprises first sub-regions (45) having a first thickness (46) and
b) comprises second sub-regions (43) having concave curvatures (41; 42) at least on the side turned towards the plastic film (24) wherein the fleece, web or fabric (25) is compressed and comprises a second thickness (44) which is smaller than the first thickness (46),
c) where a welding or bonding is applied in the first sub-region (45).

11. Method for manufacturing a protective cover (1) for a vehicle seat of one of claims 1 to 10, **characterised in that** a front sheet (3) formed with a fleece, web or fabric is welded or bonded to the rear sheet (2).

12. Method for manufacturing a protective cover (1) for a vehicle seat of claim 11, **characterised in that** the bonding or welding of the front sheet (3) to the rear sheet (2) is provided by use of a thermo-transfer-process.

13. Method for manufacturing a protective cover (1) for a vehicle seat of one of claims 11 to 12, **characterised in that** heat is applied from the direction of the rear sheet (2).

14. Method for manufacturing a protective cover (1) for a vehicle seat of one of claims 11 to 13, **characterised in that** for the bonding or welding heat is applied to one side whereas on the other side a cooling is provided.

## Revendications

1. Revêtement de protection (1) pour siège de véhicule ayant une couche avant (3) et une couche arrière (2) qui est formée avec une feuille de plastique (24), dans lequel:
a) la couche avant (3) est formée avec un tissu non tissé (25),
b) le tissu non tissé (25) est soudé avec la ou une feuille de plastique (24),
c) la couche arrière (2) est élastique,
d) la couche arrière (2) présente un évidement (9) par lequel une poche supérieure (12) formée entre la couche avant (3) et la couche arrière (2), qui peut être enfilée sur un dossier (15) d'un siège de véhicule (16), et une poche inférieure (14) formée entre la couche avant (3) et la couche arrière (2), qui peut être enfilée sur une assise (17) du siège de véhicule (16), sont accessibles,
e) la poche supérieure (12) possède un premier bord libre (18) et la poche inférieure (14) possède un deuxième bord libre (19) à travers l'évidement (9),
f) les deux bords (18, 19) de la couche arrière sont reliés l'un à l'autre au moyen de bandes de liaison (20) qui font partie intégrante de la couche arrière (2), et
g) les bandes de liaison (20) enserrant ou saisissant par l'arrière le siège de véhicule dans la zone de transition entre l'assise et le dossier.

2. Revêtement de protection (1) pour siège de véhicule selon la revendication précédente, **caractérisé en ce que** le tissu non tissé (25) possède des fibres de polypropylène.

3. Revêtement de protection (1) pour siège de véhicule selon l'une des revendications précédentes, **caractérisé en ce que** la feuille de plastique (24) est formée avec plusieurs strates.

4. Revêtement de protection (1) pour siège de véhicule selon la revendication 3, **caractérisé en ce qu'**une strate supérieure (26) de la feuille de plastique (24) dirigée vers le tissu non tissé (25) et une strate inférieure (28) de la feuille de plastique (24) sont formées avec le même matériau.

5. Revêtement de protection (1) pour siège de véhicule selon la revendication 3 ou 4, **caractérisé en ce que** la strate supérieure (26) est formée en polypropylène.

6. Revêtement de protection (1) pour siège de véhicule selon la revendication 5, **caractérisé en ce que** la strate supérieure (26) est formée avec un polypropylène modifié élastiquement, en particulier un copolymère polypropylène.

7. Revêtement de protection (1) pour siège de véhicule selon l'une des revendications précédentes, **caractérisé en ce qu'**une partie de la couche avant (3) est formée à partir d'une ou de la feuille de plastique (24).

8. Revêtement de protection (1) pour siège de véhicule selon la revendication 7, **caractérisé en ce qu'**une partie de siège de la couche avant (3) est formée à partir du tissu non tissé (25) et une partie de dos de la couche avant (3) ou une partie du dossier de la couche avant (3) est formée à partir de la feuille de plastique (24).

9. Revêtement de protection (1) pour siège de véhicule selon l'une des revendications précédentes, **caractérisé en ce que** le tissu non tissé (25) présente des évidements continus.

10. Revêtement de protection (1) pour siège de véhicule selon l'une des revendications précédentes, **caractérisé en ce que** le tissu non tissé (25) :
a) possède des premières zones partielles (45) ayant une première épaisseur (46) et
b) possède des deuxièmes zones partielles (43) ayant des courbures concaves (41 ; 42) au moins sur le côté dirigé vers la feuille de plastique (24), dans la zone desquelles le tissu non tissé (25) est comprimé et possède une deuxième épaisseur (44) qui est inférieure à la première épaisseur (46),
c) une soudure étant réalisée dans la zone des premières zones partielles (45).

11. Procédé de fabrication d'un revêtement de protection (1) pour siège de véhicule selon l'une des revendications 1 à 10, **caractérisé en ce que** la couche avant (3) formée avec un tissu non tissé (25) est soudée avec la couche arrière (2).

12. Procédé de fabrication d'un revêtement de protection (1) pour siège de véhicule selon la revendication 11, **caractérisé en ce qu'**un soudage de la couche avant (3) avec la couche arrière (2) est réalisé par un procédé de transfert thermique.

13. Procédé de fabrication d'un revêtement de protection (1) pour siège de véhicule selon l'une des revendications 11 ou 12, **caractérisé en ce qu'**un apport de chaleur est réalisé à partir de la direction de la couche arrière (2).

14. Procédé de fabrication d'un revêtement de protection (1) pour siège de véhicule selon l'une des revendications 11 à 13, **caractérisé en ce qu'**aux fins du soudage, un apport de chaleur est réalisé sur un côté tandis qu'un refroidissement est réalisé sur l'autre côté.
